(19) Europäisches Patentamt
European Patent Office
Office européen des brevets

(11) **EP 2 029 497 B1**

(12) **EUROPEAN PATENT SPECIFICATION**

(45) Date of publication and mention
of the grant of the patent:
**21.08.2019 Bulletin 2019/34**

(51) Int Cl.:
***C03C 17/02*** *(2006.01)*   ***C03C 17/00*** *(2006.01)*
***C03C 8/16*** *(2006.01)*

(21) Application number: **07729492.4**

(22) Date of filing: **24.05.2007**

(86) International application number:
**PCT/EP2007/055063**

(87) International publication number:
**WO 2007/135192 (29.11.2007 Gazette 2007/48)**

(54) **COATED GLASS SHEET**

FLACHGLAS MIT EINER BESCHICHTUNG

VERRE PLAT MUNI D'UN REVÊTEMENT

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **24.05.2006 EP 06114512
10.10.2006 EP 06122014**

(43) Date of publication of application:
**04.03.2009 Bulletin 2009/10**

(73) Proprietor: **AGC Glass Europe
1348 Louvain-la-Neuve (BE)**

(72) Inventor: **SCARSO, Florent
B-6040 Jumet (BE)**

(74) Representative: **Bayot, Daisy et al
AGC Glass Europe
Technovation Centre
IP Department
Rue Louis Blériot, 12
6041 Gosselies (BE)**

(56) References cited:
**EP-A1- 0 695 727     EP-A2- 0 092 431
EP-A2- 0 603 830     GB-A- 2 096 593
JP-A- 53 003 414     US-A- 6 136 382**

**Description**

The present invention relates to coated glass sheets, in particular glass sheets with a lacquer layer formed on a surface thereof, and to such glass sheets which are heat treatable and which may be handled before such possible heat treatment. By "lacquer layer" we mean herein paint, enamel, lacquer or other type of decorative coloured layers.

Glass sheets according to this invention may have various applications. Lacquered glass sheets may for example be used for decorative purpose, in furniture, wardrobes, as doors for furniture, as partitions, in tables, shelves, in bathrooms, in shops displays, as wall covering, as spandrels,... Such lacquer may also be used on automotive glazing panels, or at least on portions of these glazing, for example on the peripheral portions of a windscreen. More and more of these applications necessitate tempered glass sheets as tempered glass sheets have the advantage of being more resistant to breakage. Other heat treatments are also becoming often used: bending, for example.

Conventionally, lacquered glass sheets may be produced according to various processes.

In one known process, a glass sheet is covered with a layer of organic based paint which is then dried and baked in an oven, for example at around 150°C for about 10 minutes. The organic based paint may comprise, for example, a polyurethane resin, an alkyd resin, or an acrylic resin. Before applying the paint layer, the glass may be treated with a silane. When conventional lacquered glass sheets covered with a layer of organic based paint are heat treated at high temperature, the lacquer burns, is deteriorated or may be completely destroyed. Such conventional lacquered glass sheets will generally not survive temperatures higher than 200°C without degradation. When the glass sheet is tempered before it is lacquered, this necessitates that the glass sheet be already in its final dimension, since cutting and grinding a heat treated glass sheet is not possible. This does not allow mass and continuous production.

In another known process, a glass sheet is covered with a layer of IR or UV curable enamel, is then heated, in a first step, at a temperature of around 150°C or UV cured and finally is heat treated at around 600°C. The first heating step provides limited mechanical resistance (Clemen test result is less than 50 g) to the coated glass sheet to allow it to be handled on the manufacturing line until it reaches the oven where the heat treatment occurs. Nevertheless the first step does not give a mechanical and water resistance sufficient for the coated glass sheet to be resistant to transport, by truck for example, to be cut, to be edge worked or to be stocked, before heat treatment. It is necessary for such conventional enamelled glass to be heat treated immediately after production and on the same production line.

Unless otherwise indicated, references to temperatures herein are references to oven temperatures, i.e. atmosphere temperatures, in which heating or heat treatment occurs.

According to one of its aspects, the present invention provides a glass sheet as defined by claim 1. Other claims define preferred and/or alternative aspects of the invention.

Glass sheets according to the invention comprise on one of their faces a coating comprising enamel; they are characterised in that the enamel of the coating is curable under infrared rays and in that the contact angle between a droplet of demineralised water and the coating is greater than 80° or greater than 85°, more preferably greater than 90°, greater than 95°, greater than 100°, greater than 105°, or greater than 110° and less than 180°, less than 170° or less than 160°, preferably less than 150° or less than 140°, more preferably less than 130° or less than 120°. The contact angle measurement is representative of the ability of a liquid to spread over a surface by wettability. Those contact angle values are characteristic of hydrophobic substrates, i.e. substrates that do not become soaked with water. Preferably, several (at least three) measurements of contact angle may be made on a sample and the final contact angle value may be the average of these measurements.

The present invention may provide advantageous mechanical resistance properties before heat treatment. It has surprisingly been found that, by coating glass sheets with an IR-curable enamel having hydrophobic properties, i.e. by selecting in a specific family of enamels (i.e. the IR-curable enamels) a specific range of enamels (i.e. those having hydrophobic properties), these may offer good resistance under grinding conditions and be handled and transported before heat treatment without damaging the coating, and this with only a drying step of the enamel at a temperature of between 100°C and 300°C, preferably between 200°C and 250°C. Such a temperature may allow solvents comprised in the enamel to be eliminated whilst glass frit, pigments and medium stay in the enamel. Glass sheets coated and dried accordingly may be handled and transported before heat treatment without damaging the coating, for example without creating scratches. Moreover they may be cut and ground before heat treatment without causing the coating to peel off or to be damaged at the borders of the cutting line. Furthermore they offer, before heat treatment, a good resistance when, for example, washing the glass sheets or edge working avoiding the peeling off or destruction of the coating.

We found that the combination of these properties was not achieved with enamels curable under UV rays, the coating tending to peel-off from the glass substrate under water for example, sometimes leaving the glass substrate completely uncoated. And this was found to be the same whatever the contact angle of a water droplet on the UV-curable enamel. We also found that the combination of the properties mentioned above was not achieved with enamels curable under IR rays showing contact angles between a droplet of water and the enamel coating less than or equal to 75°. Indeed such enamels tend to solubilise in water and may show a very poor mechanical resistance. It is believed that the hydrophilic or hydrophobic quality of an IR-curable enamel is linked to the resin (medium) proportion present therein.

When there is not much resin but more frit and pigments, we believe that the enamel tends to absorb water, whereas when there is a greater proportion of resin in the enamel, it tends to repel water and is hydrophobic.

The contact angle referred to may be that measured in respect of direct contact between a water droplet and the enamel.

Glass sheets according to present invention, before heat treatment, may advantageously offer good properties in terms of mechanical resistance of the coating. Different tests may be used to evaluate this mechanical resistance before heat treatment. They may be used, for example, to simulate a transport by truck and thus evaluate if the coating will resist to such transport without deterioration or with an acceptable deterioration, i.e. not visible or at least not aesthetically disturbing when for example viewed from the glass side.

1. Clemen test: a glass sheet according to the present invention when viewed from the glass side, may show no scratch visible at 200 g, preferably at 300 g, more preferably at 400 g and still more preferably at 500 g.
2. Clemen test: a glass sheet according to the present invention when viewed from the coated side, may show no visible scratch tearing up the coating at 200 g, preferably at 300 g or 400 g, more preferably at 500 g and still more preferably at 600 g.
3. Brush test: a glass sheet according to the present invention when viewed from the glass side, may show no visible defect at 500 cycles, preferably at 1000 cycles, more preferably at 2000 or 3000 cycles and still more preferably at 4000 cycles.
4. Lucite test: a glass sheet according to the present invention when viewed from the glass side, may show no visible defect at 100 cycles, preferably at 200 cycles, more preferably at 300 cycles and still more preferably at 400 cycles.

The Clemen, brush and Lucite tests are all described hereunder.

The present invention has particular advantages in relation to heat treatable glass sheets. The term "heat treatable glass sheet" as used herein means that the coated glass sheet is adapted to undergo a bending and/or thermal tempering and/or thermal hardening operation and/or other comparable heat treatment process without creating defects (e.g. aesthetical defects in the coating) and having still a good adhesion between the glass sheet and the coating. Such heat treatment processes may involve heating or exposing the glass sheet carrying the coating to a temperature greater than about 560°C, for example, between 560°C and 750°C in the atmosphere, for between 2 minutes and 20 minutes, preferably for maximum 15 minutes, depending, inter alia, on the type of oven and on the thickness of the glass sheet.

Glass sheets according to present invention, once heat treated, may furthermore advantageously offer similar properties to conventional non heat treated lacquered glass in terms of adhesion of the coating to the glass, chemical resistance, mechanical resistance and glue resistance. In particular a glass sheet according to the present invention may present one or more of the following properties:

| Opacity | Luminous transmittance < 15%, preferably <10%, more preferably <1%, still more preferably <0.1% |
| --- | --- |
| Clemen test (according to ISO 1518-1992) | No visible scratch at 1000g |
| UV test (according to standard ASTM G53-88, without water, at 60°C, by continuous irradiation UVA 340nm) | No colour change ($\Delta E^*<2$) after 1000h - 300W |
| Condensation test (according to standard DIN 50 017 / 40°C / 98% relative humidity / 20 days) | No blistering |

The Clemen test, the UV test and the condensation test are all described hereunder.

Enamels comprise generally a powder made of a glass frit and pigments, and a medium. The medium ensures that the solid particles are in correct suspension and allows application and temporary adhesion of the enamel to the substrate. The medium of the present invention is organic and may contain IR-crosslinkable elements. Mediums containing crosslinkable elements may comprise one or more of alkyds, acrylic, acrylamide, acrylic-styrene, vinyl-acrylic, urethane (polyurethane), polyester, urethane alkyds, amino resins, polyamide, epoxy, epoxy ester or phenolic resins. Other mediums may be silicon resins, PVC, PVB, or water-based resins. Acrylic resin is used.

The term "enamel" is used herein equally for an enamel composition before any drying or heat treatment, an enamel composition which is dried but not yet sinterised, and enamel after heat treatment, which is sinterised.

Preferably, the enamel coating is in direct contact with the glass substrate. Alternatively, an adhesion promoter may be present between the glass and the coating to improve the adhesion of the coating to the glass. This adhesion promoter may comprise silane.

Such preferred structures may provide particularly good mechanical resistance properties for transportation, for cutting and grinding, and for resistance under running water prior to any heat treatment.

The thickness of the coating comprising enamel, once dried and before heat treatment, may be at least 20 µm, at least 30 µm, at least 40 µm, at least 50 µm and not more than 200 µm, not more than 150 µm, not more than 120 µm, not more than 100 µm, not more than 90 µm.

References to layers thicknesses herein are references to the mean geometrical thickness of the layer.

In a preferred embodiment, the coating of the invention may be continuous and extend over substantially the whole surface of the glass sheet, i.e. over more than 90% of the surface of the glass sheet, preferably over more than 95% of the surface of the glass sheet.

For decorative purposes, the coating may be coloured. Opacity is also a function of the coating. If the glass sheet is heat treated, colour may change during heat treatment, depending on the composition of the coating. If this occurs, this should be taken into account on the heat treatable product, to ensure that the final colour, after heat treatment, is as desired.

The glass substrate used may be flat glass, in particular float glass of various thicknesses (between 1.8 and 10.2 mm, for example); it may be soda lime glass and may be clear, extra-clear, coloured, etched, sand-blasted, patterned or coated glass. Glass sheets according to the invention may have a size greater than 1m x 1m. They may have sizes, known as PLF, of for example 3.21m x 6m or 3.21m x 5.50m or 3.21m x 5.10m or 3.21m x 4.50m or sizes, known as DLF, of for example 3.21m x 2.50m or 3.21m x 2.25m.

Forming coated glass sheets according to the invention may comprise the following steps, in the order recited:

- providing a glass sheet;
- applying a coating of IR-curable enamel providing a contact angle, at least when dried, greater than 80°, on a surface of the glass sheet;
- drying the enamel at a temperature not exceeding 300°C, preferably not exceeding 250 °C, more preferably around 150-200 °C, so that the enamel is dried, i.e. the major part of the organic portion is evaporated or crosslinked (e.g. solvents are evaporated), and sticks to the glass but is not yet substantially fused or sinterised; this may take around 1 to 20 minutes, preferably 2 to 10 minutes;

Enamel may be applied by any method known in the art, for example the processes of roller coating or curtain coating, the spray process or flow process. The screen printing method may also be used, especially if only portions of the glass sheet are to be coated, or a digital printing method.

When a glass sheet according to the present invention is heat treated, the organic medium evaporates or burns and the glass frit and pigment melt; the enamel is fused.

Preferably, a glass sheet according to the invention, once thermally toughened may be used as safety glass in buildings, in accordance with the standard EN12150-1:2000. Preferably, a glass sheet according to the invention, once thermally toughened breaks according to the fragmentation test of standard prEN14-179-1:2001 or EN1863-1:2000.

Embodiments of the invention will now be further described, by way of examples only, to be compared with comparative examples not in accordance with the invention.

### Examples 1 - 6

Sheets of glass are washed in the normal manner and are covered with a coating of white enamel curable under infrared rays, using a bar coater. The coatings are dried at moderated temperature, in a laboratory static drying-oven. Temperatures and timing of drying are given in Table 1. Thickness of the enamel coating, once dried, are also given.

Water resistance of the products according to examples 1 to 6, under running water is good. Adherence of the coating to the glass is good; this may allow good grinding without defects on the edges. Results of the mechanical resistance tests made on these samples are presented in Table 1.

The contact angle of a 5 µl demineralised water droplet on the coated side of these samples was measured with a DIGIDROP from the company GBX after stabilisation of the droplet, i.e. after a few seconds; three measurements were made which gave an average value of 116.6°. To measure the contact angle, a demineralised water droplet is deposited on the sample with a needle. The apparatus is connected through a camera to a computer which measures the angle between the baseline of the drop and the tangent at the drop boundary. On hydrophobic surfaces, which are incompatible with water, one observes a large contact angle (greater than 70°); on these surfaces, water droplets simple rest on the surface, without actually wetting to any significant extent.

Table 1

| Sample n° | drying T° [°C] | drying time [min] | coating thickness [μm] | Clemen test viewed from glass side | Clemen test viewed from coating side | Brush test | Lucite test |
|---|---|---|---|---|---|---|---|
| 1 | 150 | 30 | 40 | 300 g | 300 g | 1000 cycles | 100 cycles |
| 2 | 200 | 20 | 65 | 500 g | > 600 g | 1000 cycles | 300 cycles |
| 3 | 250 | 30 | 85 | 300-400 g | 400 g | 1000 cycles | 100 cycles |
| 4 | 250 | 10 | 40 | 200 g | 200 g | 1000 cycles | < 100 cycles |
| 5 | 150 | 10 | 85 | 300 g | 400 g | 1000 cycles | 200 cycles |
| 6 | 150 | 20 | 40 | 200 g | 200 g | 1000 cycles | < 100 cycles |

### Example 7

Lacquered glass sheets according to the invention were manufactured on a production line in which flat sheets of soda lime float glass 4 mm thick were conveyed along the line by a roller conveyor. The sheets of glass were first of all washed in the normal manner and then covered with a coating of IR-curable white enamel TEMPVER Bianco 3400β1475 (laboratory code: Tempver Bianco 3400-06-011) from the company FENZI, using a curtain coater.

The composition of the white enamel TEMPVER Bianco 3400β147S applied to the glass sheets was as follows:

- 60 kg of TEMPVER 3400 from the company FENZI.
  TEMPVER 3400 consists essentially of around 74% fillers (including glass frit), around 21% solvents (including terpenic, in particular monoterpenic, alcohols and alkenes) and around 5% crosslinkable organic material (including acrylic compounds).
- 1.8 kg of the ADDITIVE ANTAL 50S from the company FENZI, including terpenic, in particular monoterpenic, alcohols and alkenes.
- 6 kg of MEDIUM 3480 A from the company FENZI.
  MEDIUM 3480 A consists essentially of around 85% solvents (including terpenic, in particular monoterpenic, alcohols and alkenes) and around 15% crosslinkable organic material (including acrylic compounds).
- 6 kg of SOLVENT 3480 A2 from the company FENZI, including terpenic, in particular monoterpenic, alcohols and alkenes.
- addition of turpentine to obtain a viscosity of around 30-45 seconds Cup Ford n°4, adapted for curtain coater application.

The coating was then dried in an oven for a duration of about 7 minutes. The temperature profile in the oven was arranged to provide a temperature measured at the surface of the glass sheet of 130°C towards the beginning of the cycle rising to 248°C towards the middle of the cycle and decreasing to 215°C towards the end of the cycle. Note that such temperature profile may also be obtained by using two separate ovens.

Thickness of the enamel coating, once dried and before heat treatment, was around 57 μm, which corresponds to a quantity of 220 g/m$^2$ in liquid state.

Contact angles of a 5 μl demineralised water droplet on the coated side of these glass sheets, once dried and before heat treatment, were measured with a DIGIDROP from the company GBX after stabilisation of the droplet, i.e. after a few seconds; the average value of contact angle is 115°.

The colour of the coating, once dried and before heat treatment, is yellow.

Mechanical resistance tests were made on the coated side of these glass sheets, once dried and before heat treatment. Here are the results thereof:

- Clemen test (viewed from glass side): 300 g.
- Brush test: 1000 cycles.

- Lucite test: 250 cycles.
- Persoz measurement: 176 s.

The coated glass sheets were cut, washed and ground (under water) before heat treatment without causing the coating to peel off or to be damaged at the borders of the cutting line. Holes were drilled in the coated glass sheets while not forming unacceptable peeling off.

The coated glass sheets were then heat treated in a oven at 670 °C during 3 minutes and 15 seconds.

After heat treatment they recovered their white colour, with a good opacity.

Mechanical and chemical tests were then made on the heat treated glass sheets. They show the following results:

- Clemen test: at least 3000 g.
- Brush test: at least 1000 cycles.
- Lucite test: at least 500 cycles.
- Condensation test: $\Delta E^* = 0.09$; no peeling-off.
- UV test: $\Delta E^* = 0.59$.
- 120°C during 20 days: $\Delta E^* = 0.46$.

### Example 8

Lacquered glass sheets according to the invention were manufactured on a production line in which flat sheets of soda lime float glass were conveyed along the line by a roller conveyor. The sheets of glass were first of all washed in the normal manner and then covered with a coating of IR-curable black enamel, using a curtain coater. This black enamel comprises a polyurethane medium and 50% by weight of fillers of a black enamel TEMPVER 3400 from the company FENZI. By "fillers of enamel", we mean the portion of an enamel which is not organic, i.e. the frit and the pigments.

The coating was then dried in an oven for a duration of about 4 to 7 minutes. The temperature profile in the oven was arranged to provide a temperature measured at the surface of the glass sheet of 150°C towards the beginning of the cycle rising to 220°C towards the end of the cycle.

Thickness of the enamel coating, once dried and before heat treatment, was between around 30 and 40 $\mu$m, which corresponds to a quantity of 90 g/m$^2$ in liquid state.

Contact angles of a 5 $\mu$l demineralised water droplet on the coated side of these glass sheets, once dried and before heat treatment, were measured with a DIGIDROP from the company GBX after stabilisation of the droplet, i.e. after a few seconds; the average value of contact angle is 83°.

The coated glass sheets were cut, washed and ground (under water) before heat treatment without causing the coating to peel off or to be damaged at the borders of the cutting line.

The coated glass sheets were then heat treated and the resulting heat treated glass sheets were good in terms of adhesion of the coating to the glass and mechanical resistance. Opacity was not completely achieved.

### Comparative examples 1-12

Lacquered glass sheets not in accordance with the invention are manufactured by covering various glass sheets with different enamels, using a bar coater. The coatings are dried so that the major part of the organic portion is evaporated or crosslinked (e.g. solvents are evaporated), and sticks to the glass but is not yet substantially fused or sinterised. Nature of the enamel coatings and average contact angle values measured according to the previous examples are given in Table 2.

All the UV-curable enamels (comparative examples 1 to 6) showed an acceptable mechanical resistance but an unacceptable peeling-off of the coating when cutting the glass sheet or under running water, sometimes leaving the glass substrate completely uncoated.

The IR-curable enamels (comparative examples 7 to 12) showed a very poor mechanical resistance (Clemen test results were less than 50g) and a bad resistance to water. In the presence of water, the coating absorbs water then peels-off and finally becomes dispersed in the water.

Table 2

| Comp. Ex. n° | Enamel reference | Enamel drying | Enamel manufacturer | contact angle |
|---|---|---|---|---|
| 1 | 1T1415UV724a | UV | Johnson Mattey | 60,8 |
| 2 | 1T1430UV724a | UV | Johnson Mattey | 67,5 |
| 3 | 14251UV7024c | UV | Ferro | 69,4 |

(continued)

| Comp. Ex. n° | Enamel reference | Enamel drying | Enamel manufacturer | contact angle |
|---|---|---|---|---|
| 4 | 14251 UV | UV | Ferro | 69,8 |
| 5 | 1T1720UV724a | UV | Johnson Mattey | 76,8 |
| 6 | 1T55M050UV695 | UV | Johnson Mattey | 78,9 |
| 7 | 1T1425 | IR | Johnson Mattey | 5,8 |
| 8 | 1T1415 | IR | Johnson Mattey | 7,9 |
| 9 | AF2600-65-96 | IR | Johnson Mattey | <10 |
| 10 | 144001 black 801029 | IR | Ferro | <10 |
| 11 | 1T1417 | IR | Johnson Mattey | 28,3 |
| 12 | 1L6040 | IR | Johnson Mattey | 48,4 |

The **Clemen test** is used to evaluate the scratch resistance of the coating. A tungsten carbide tipped needle is pressed onto the coating by applying a load on the needle. The needle is used to scratch the coating over a distance of about 60 mm. Several weights (from 100 g till 2500 g with an interval of 50 g at the beginning and 250 g after) may be applied on the same sample with a certain distance between each of the scratches. Hence a series of parallel scratches may be made into the sample. Full details of this test are set out in International Standard ISO 1518-1992.

The **brush test** is used to evaluate the resistance of the coating to erosion caused by scrubbing. Full details of this test are set out in ASTM Standard D 2486 - 00. Samples of coated glass were submitted to *Test Method* A. The sample is scrubbed dry, with a bristle brush until the coating is pierced.

The **Lucite test** is used to evaluate the scratch resistance of the coating. The sample is sprinkled, on the coating side, with Lucite® 4F or 47G (a quarter of a tea spoon on a sample of 15 x 25 cm), and then covered with a piece of clear glass of 6mm thick (10 x 10 cm) on which a weight of 3,938 kg is placed. The assembly "upper glass and weight" is subjected to a backward and forward movement during 100 cycles and more.

The coating hardness may be measured with a **Persoz pendulum.** The samples are conditioned at a temperature of 20°C during at least 24 hours prior to the hardness measurement. The pendulum hardness test is based on the principle that the amplitude of the pendulum's oscillation will decrease more quickly when supported on a softer surface. The Persoz test measures the time for the amplitude to decrease from 12° to 4°. Full details of this test are set out in International Standard ISO 1522-1998.

The **UV test** is used to simulate the deterioration caused by sunlight. Full details of this test are set out in ASTM Standard G53-88. Samples are exposed to ultraviolet light. The exposure conditions used herein are: UVA lamp at 340 nm; power of UV lamp: 300W; timing of the UV exposure: 1000 hours; temperature of UV exposure: 60°C; no condensation exposure was performed. No colour change should appear after the test, preferably the variation of colour $\Box E^*$ should be less than 2. $\Box E^*$ is calculated as follows: $\Box E^* = \sqrt{(L^{*2} + a^{*2} + b^{*2})}$ where L* a* b* are measured on the CIElab scale.

The **condensation test** is used to control the behaviour of the sample in humid ambient atmospheres and to pinpoint any defects of the protection of the samples against corrosion. Full details of this test are set out in the standard DIN50 017. The conditions used herein are: 98% relative humidity; temperature of 40°C; during 20 days. No blistering, i.e. local peeling off of the coating, should be visible after the test.

## Claims

1. Glass sheet having a coating comprising enamel provided on at least part of its surface **characterised in that** the enamel comprising a powder made of a glass frit, pigments and a medium comprising acrylic resins, the enamel precursor being curable under infrared rays, the coating being dried at temperature between 100 and 300°C, and the contact angle between a demineralized water droplet and the dried coating at a portion of the glass sheet carrying the coating is greater than 80°.

2. Glass sheet according to claim 1, having on its coated side a scratch resistance determined by the Clemen test showing no scratches visible from the glass side when applying a weight of 200 g, preferably when applying a weight of 300 g.

3. Glass sheet according to any preceding claim, having on its coated side a resistance to friction determined by the brush test showing no defect visible from the glass side when applying 1000 cycles preferably when applying 2000 cycles.

4. Glass sheet according to any preceding claim, having on its coated side a resistance to friction determined by the Lucite test showing no defect visible from the glass side when applying 100 cycles preferably when applying 200 cycles.

5. Glass sheet according to any preceding claim, wherein the thickness of the coating ranges from 20 to 200 $\mu$m preferably from 50 to 100 $\mu$m.

6. Glass sheet according to any preceding claim, wherein the coating is in direct contact with the glass sheet.

7. Glass sheet according to any of claims 1 to 6, wherein traces of an adhesion promoter are present at the surface of the glass sheet.

8. Glass sheet according to any preceding claim, wherein the glass sheet is heat treatable.

9. Glass sheet according to any preceding claim, wherein the coating covers the entire or substantially the entire surface of the glass sheet.

10. Use of an IR-curable enamel according to one of the preceding claims for coating a glass sheet on substantially its entire surface and so obtaining a heat treatable lacquered glass sheet having on its coated side a resistance to friction determined by the brush test showing no defect visible from the glass side when applying 1000 cycles.

11. Use according to claim 10 so obtaining a heat treatable lacquered glass sheet having on its coated side a scratch resistance determined by the Clemen test showing no scratches visible from the glass side when applying a weight of 200 g.

**Patentansprüche**

1. Glasscheibe mit einer Email umfassenden Beschichtung, die auf wenigstens einem Teil ihrer Oberfläche vorgesehen ist, **dadurch gekennzeichnet, dass** die Emailschicht ein aus einer Glasfritte hergestelltes Pulver, Pigmente und ein Acrylharze enthaltendes Medium umfasst, wobei der Emailvorläufer durch Infrarotstrahlung härtbar ist, wobei die Beschichtung bei einer Temperatur zwischen 100 und 300 °C getrocknet wird, und wobei der Kontaktwinkel zwischen einem demineralisierten Wassertröpfchen und der getrockneten Beschichtung an einem die Beschichtung tragenden Bereich der Glasscheibe größer als 80° ist.

2. Glasscheibe nach Anspruch 1, die auf ihrer beschichteten Seite eine durch den Clemen-Test bestimmte Kratzfestigkeit aufweist, bei der keine von der Glasseite her sichtbaren Kratzer auftreten, wenn ein Gewicht von 200 g, bevorzugt ein Gewicht von 300 g aufgebracht wird.

3. Glasscheibe nach einem vorhergehenden Anspruch, die auf ihrer beschichteten Seite eine durch den Bürsttest bestimmte Verschleißfestigkeit aufweist, bei der kein von der Glasseite her sichtbarer Defekt auftritt, wenn 1000 Zyklen, bevorzugt 2000 Zyklen durchgeführt werden.

4. Glasscheibe nach einem vorhergehenden Anspruch, die auf ihrer beschichteten Seite eine durch den Lucite-Test bestimmte Verschleißfestigkeit aufweist, bei der kein von der Glasseite her sichtbarer Defekt auftritt, wenn 100 Zyklen, bevorzugt 200 Zyklen durchgeführt werden.

5. Glasscheibe nach einem vorhergehenden Anspruch, wobei die Dicke der Beschichtung im Bereich von 20 bis 200 $\mu$m, bevorzugt von 50 bis 100 $\mu$m liegt.

6. Glasscheibe nach einem vorhergehenden Anspruch, wobei die Beschichtung sich in direktem Kontakt mit der Glasscheibe befindet.

7. Glasscheibe nach einem der Ansprüche 1 bis 6, wobei Spuren eines Haftvermittlers auf der Oberfläche der Glasscheibe vorhanden sind.

8. Glasscheibe nach einem vorhergehenden Anspruch, wobei die Glasscheibe wärmebehandelbar ist.

9. Glasscheibe nach einem vorhergehenden Anspruch, wobei die Beschichtung die gesamte oder im Wesentlichen gesamte Oberfläche der Glasscheibe bedeckt.

10. Verwendung einer IR-härtbaren Emailschicht nach einem der vorhergehenden Ansprüche zur Beschichtung einer Glasscheibe auf im Wesentlichen ihrer gesamten Oberfläche, wodurch eine wärmebehandelbare lackierte Glasscheibe erhalten wird, die auf ihrer beschichteten Seite eine durch den Bürsttest bestimmte Verschleißfestigkeit aufweist, bei der kein von der Glasseite her sichtbarer Defekt auftritt, wenn 1000 Zyklen durchgeführt werden.

11. Verwendung nach Anspruch 10, wodurch eine wärmebehandelbare lackierte Glasscheibe erhalten wird, die auf ihrer beschichteten Seite eine durch den Clemen-Test bestimmte Kratzfestigkeit aufweist, bei der keine von der Glasseite her sichtbaren Kratzer auftreten, wenn ein Gewicht von 200 g aufgebracht wird.


## Revendications

1. Feuille de verre ayant un revêtement comprenant de l'émail disposé sur au moins une partie de sa surface, **caractérisée en ce que** l'émail comprend une poudre constituée d'une fritte de verre, de pigments et d'un milieu comprenant des résines acryliques, le précurseur d'émail étant durcissable sous des rayons infrarouges, le revêtement étant séché à une température comprise entre 100 et 300 °C, et l'angle de contact entre une gouttelette d'eau déminéralisée et le revêtement séché au niveau d'une partie de la feuille de verre comportant le revêtement est supérieur à 80°.

2. Feuille de verre selon la revendication 1, ayant, sur son côté revêtu, une résistance à la rayure déterminée par l'essai Clemen n'indiquant aucune rayure visible du côté du verre lors de l'application d'un poids de 200 g, de préférence lors de l'application d'un poids de 300 g.

3. Feuille de verre selon l'une quelconque des revendications précédentes, ayant, sur son côté revêtu, une résistance au frottement déterminée par l'essai à la brosse n'indiquant aucun défaut visible du côté du verre lors de l'application de 1000 cycles, de préférence lors de l'application de 2000 cycles.

4. Feuille de verre selon l'une quelconque des revendications précédentes, ayant, sur son côté revêtu, une résistance au frottement déterminée par l'essai Lucite n'indiquant aucun défaut visible du côté du verre lors de l'application de 100 cycles, de préférence lors de l'application de 200 cycles.

5. Feuille de verre selon l'une quelconque des revendications précédentes, dans laquelle l'épaisseur du revêtement est dans la plage de 20 à 200 $\mu$m, de préférence de 50 à 100 $\mu$m.

6. Feuille de verre selon l'une quelconque des revendications précédentes, dans laquelle le revêtement est en contact direct avec la feuille de verre.

7. Feuille de verre selon l'une quelconque des revendications 1 à 6, dans laquelle des traces de promoteur d'adhérence sont présentes au niveau de la surface de la feuille de verre.

8. Feuille de verre selon l'une quelconque des revendications précédentes, la feuille de verre pouvant être traitée par la chaleur.

9. Feuille de verre selon l'une quelconque des revendications précédentes, dans laquelle le revêtement recouvre la surface entière ou sensiblement la surface entière de la feuille de verre.

10. Utilisation d'un émail durcissable par IR selon l'une des revendications précédentes pour revêtir une feuille de verre sur sensiblement sa surface entière et obtenir ainsi une feuille de verre laquée pouvant être traitée par la chaleur ayant, sur son côté revêtu, une résistance au frottement déterminée par l'essai à la brosse n'indiquant aucun défaut visible du côté du verre lors de l'application de 1000 cycles.

**11.** Utilisation selon la revendication de façon à obtenir une feuille de verre laquée pouvant être traitée par la chaleur ayant, sur son côté revêtu, une résistance à la rayure déterminée par l'essai Clemen n'indiquant aucune rayure visible du côté du verre lors de l'application d'un poids de 200 g.